Europäisches Patentamt

European Patent Office

Office européen des brevets

(19)

(11) Publication number: **0 094 012**
**B1**

(12) **EUROPEAN PATENT SPECIFICATION**

(45) Date of publication of patent specification: **30.09.87**  (51) Int. Cl.⁴: **B 65 G 47/53, B 65 G 47/64**

(21) Application number: **83104359.1**

(22) Date of filing: **03.05.83**

(54) **Diverter apparatus for conveyor systems.**

(30) Priority: **03.05.82 US 374312**

(43) Date of publication of application:
**16.11.83 Bulletin 83/46**

(45) Publication of the grant of the patent:
**30.09.87 Bulletin 87/40**

(84) Designated Contracting States:
**AT BE CH DE FR GB IT LI LU NL SE**

(56) References cited:
**DE-A-3 029 235**
**FR-A-2 140 070**
**GB-A-1 396 545**
**US-A-2 985 274**

(73) Proprietor: **THE INTERLAKE COMPANIES, INC.**
**Commerce Plaza - 2015 Spring Road**
**Oak Brook, Illinois 60521 (US)**

(72) Inventor: **Di Falco, Benjamin P.**
**7242 Fox Harbor**
**Prospect Kentucky 40059 (US)**
Inventor: **Fish, Ernest R.**
**Route No. 1 P.O. Box 143**
**Lebanon Junction Kentucky 40150 (US)**

(74) Representative: **Baillie, Iain Cameron et al**
**c/o Ladas & Parry Isartorplatz 5**
**D-8000 München 2 (DE)**

## Description

The present invention relates to diverter mechanisms for conveyors to divert conveyed articles from a main conveyor path to an intersecting branch conveyor path.

Prior diverter mechanisms have been fundamentally of either the fixed-angle type or the variable-angle type. Fixed-angle diverter mechanisms are disclosed, for example in U.S. Patents 3,269,519 and 3,303,923 the former comprising a plurality of spaced-apart chains provided with wheels and the latter comprising pulleys and endless-loop flexible bands. But such fixed-angle mechanisms are of limited utility since they can only be used for diverting product to a single branch conveyor path at a single fixed angle of intersection with the main conveyor path.

Variable-angle diverter mechanisms are disclosed, for example, in U.S. Patents 3,058,565, 3,983,988 and 4,264,002. Such mechanisms include one or more rows of rollers or wheels which are pivotally movable to vary the diverting angle. But in this type of conveyor diverter, the spacing between the roller rows and the spacing between the diverter rollers and the main and branch conveyors serve to place a lower limit on the size of article which can be handled by the diverter mechanism. Thus, articles which have small dimensions in the conveying direction cannot conveniently be handled since they tend to tip into the spaces between the roller rows and between the rollers and the main and branch conveyors. Furthermore, since such diverter mechanisms support the conveyed articles only at points spaced-apart in the conveying direction, the conveyed articles must have relatively firm and rigid bottoms.

Also, the aforementioned disadvantages of prior diverter mechanisms serve to limit the speed at which articles can be conveyed thereacross. To applicants' knowledge, none of the prior art diverters, even those designated as highspeed, accommodate the higher speed currently afforded by computerized controls of conveyor systems utilizing diverters.

In general, diverter mechanisms for high speed or high volume continuous conveying systems must meet certain performance characteristics to be effective. For example, in high speed continuous applications the diverting mechanism must be fast acting so as to be capable of selectively diverting single articles from a continuously conveyed series of articles. Also, in high speed systems the forward momentum of the conveyed articles is a major consideration. Many prior systems rely on this momentum to get the conveyed article across the diverter and, accordingly, have difficulty in restarting in the event of a stoppage with an article on the diverter. This prevents such systems from being able to function effectively, even at low speed.

The object of the present invention is to provide an improved conveyor diverter mechanism which avoids the disadvantages of prior mechanisms while affording additional structural and operating advantages.

The present invention provides diverter apparatus for selectively diverting articles from one conveyor to an intersecting conveyor said diverter apparatus comprising article conveying means, for conveying articles in a conveying direction, said article conveying means defining a plurality of parallel portions spaced apart in a direction transverse to the conveying direction, control means coupled to said article conveying means for effecting simultaneous parallelogram-type movement of the portions thereof in a support plane between a first position wherein the conveying direction thereof is substantially aligned with that of the one conveyor and a second position wherein the conveying direction thereof is substantially aligned with that of the intersecting conveyor, (i.e. a diverter apparatus as disclosed in U.S.—A—3,983,988) characterized in that each of said portions comprises an article support reach of an endless band, said support reaches cooperating to define a support plane.

The diverter mechanism of the invention can be used in high speed conveying systems, can conveniently be used for conveying small articles and affords variability of the diverting angle while at the same time providing continuous support for the conveyed articles in the conveying direction.

The diverting apparatus of the invention has great flexibility and can be used with a wide variety of shapes and sizes of conveyed articles and can divert them in a variety of different diverting angles.

Further, features and advantages of a preferred embodiment of this invention will hereinafter be fully described with reference to the accompanying drawing in which:

FIG. 1 is a fragmentary, top plan view of a conveyor system including a main conveyor and an intersecting branch conveyor and a diverter apparatus disposed therebetween, constructed in accordance with the present invention;

FIG. 2 is an enlarged top plan view of the diverter apparatus of the present invention, similar to FIG. 1, but with the main conveyor belt removed, more clearly to illustrate the diverter construction;

FIG. 3 is an enlarged, fragmentary, side elevational view of the system of FIG. 1, as viewed from the lower side thereof;

FIG. 4 is a view in vertical section taken along the line 4—4 in FIG. 3;

FIG. 5 is a front elevational view of the input guide roller of the diverter apparatus of the present invention, with a portion of the roller removed more clearly to show the construction thereof; and

FIG. 6 is a view in vertical section taken along the line 6—6 in FIG. 4.

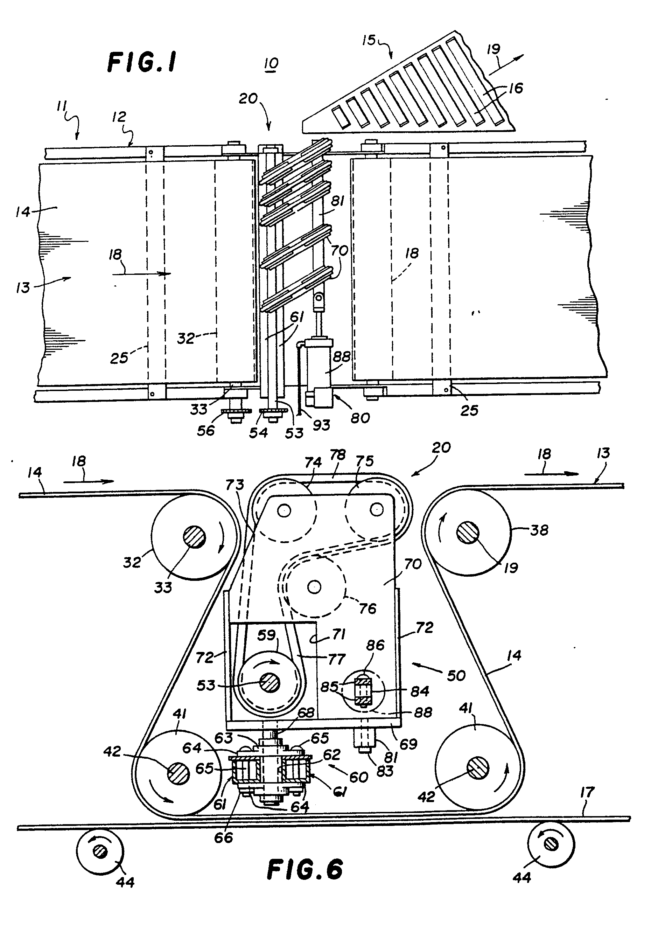

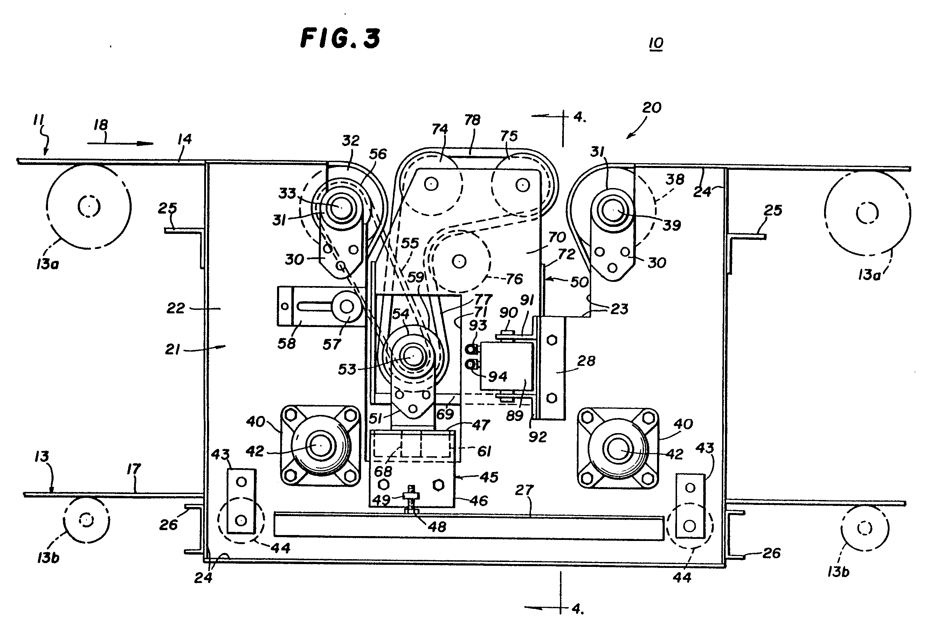

Referring now to FIGS. 1—3 of the drawings, there is illustrated a system, generally designated by the numeral 10, including a main conveyor 11, a branch conveyor 15 and a diverter assembly 20 interposed therebetween. The main conveyor 11 is preferably a belt-type conveyor and is illustrated as a belt on roller conveyor comprising a frame 12 rotatably supporting a plurality of rollers 13a and 13b (see FIG. 3) for supporting thereon an endless belt 13. More particularly, the rollers 13a carry an article-support flight 14 of the belt 13, while the rollers 13b support a return flight 17 thereof. While the main conveyor 11 has been illustrated as a belt on roller conveyor, it will be appreciated that it could also be a belt on slider bed or belt driven live roller conveyor. The branch conveyor 15 may be any suitable type of conveyor, but is illustrated as a roller conveyor comprising rollers 16 staggered in length as they merge with the main conveyor 11. The main conveyor 11 operates to move conveyed articles along a main conveyor path in the direction indicated by the arrows 18, while the branch conveyor 15 conveys articles along a branch conveyor path in a direction indicated by the arrows 19.

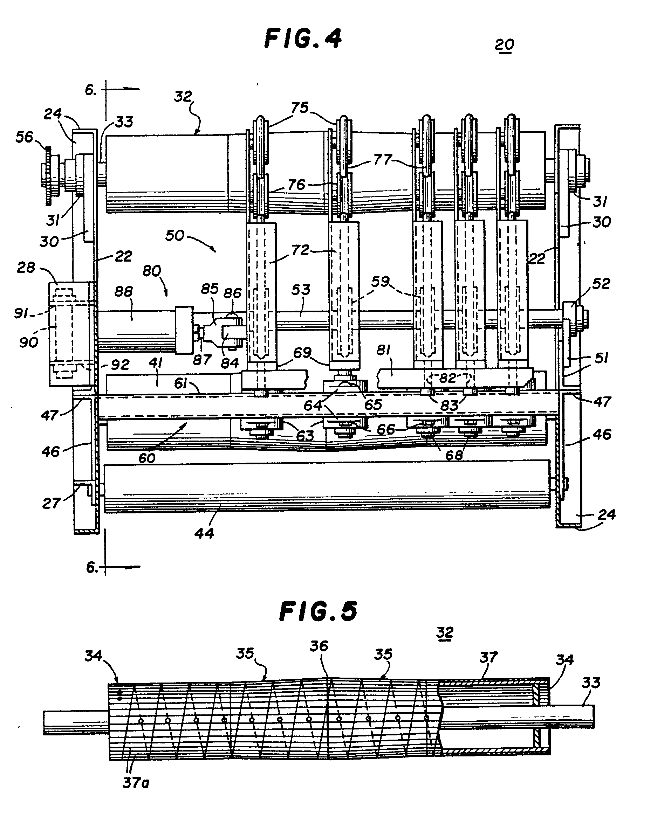

Referring also to FIGS. 4—6 of the drawings, the diverter assembly 20 includes two side plates 21, respectively disposed on opposite sides of the main conveyor 11 and fixedly secured to the frame 12 thereof. Each of the side plates 21 has a flat, planar, substantially vertical main wall 22 having an irregular cutout 23 formed in the upper edge thereof and provided around the perimeter thereof, from one end of the cutouts 23 to the other end thereof, with a laterally outwardly extending peripheral flange 24. Two angle bars 25 inter-connect the side plates 21 adjacent to the upper ends thereof and two channel bars (26) (see FIG. 3) inter-connect the side plates 21 adjacent to the lower ends thereof. Respectively fixedly secured to the side plates 21 parallel and adjacent to the lower edges thereof are two elongated angle shelves 27 (see FIGS. 3 and 4). Fixedly secured to one side plate 21 along a vertical edge portion of the cutout 23 is an angle mounting bracket 28 for a purpose to be explained more fully below.

Fixedly secured to the side plates 21 along coplanar horizontal edge portions of the cutouts 23 are two pairs of bearing brackets 30, each of which brackets 30 carries a bearing 31. The bearings 31 of each pair thereof are coaxial along an axis extending transversely of the main conveyor 11. One pair of bearings 31 rotatably supports the shaft 33 of an input guide roller 32 which extends transversely across the main conveyor 11 in frictional engagement with the support flight 14 of the belt 13. Referring to FIG. 5, the guide roller 32 has two circular, cylindrical end sections 34 and two frusto-conical center sections 35 inclined radially outwardly and axially inwardly of the shaft 33 and joining at a crest 36, this inclined construction serving to maintain the belt 13 centered on the roller 32 in a well known manner. Preferably, the roller 32 has the outer surface thereof covered with a frictional sleeve 37 which may, for example, have circumferentially spaced-apart, axially extending ribs 37a to facilitate frictional engagement with the belt 13.

The other pair of the bearings 31 cooperate rotatably to support the shaft 39 of an output guide roller 38 which is also disposed in engagement with the support flight 14 of the belt 13. Carried by the side plates 21 adjacent to the lower ends thereof are two pairs of flange bearings 40, each pair of bearings 40 cooperating rotatably to support a shaft 42 of a guide roller 41, the axes of rotation of which are parallel to those of the guide rollers 32 and 38. Preferably the guide rollers 38 and 41 are of the same type of construction as the guide roller 32, with the exception that they do not include the frictional sleeve 37. In use, the support flight 14 of the belt 13 is wrapped over and downwardly around the guide roller 32, around and beneath the guide rollers 41 and upwardly around and above the guide roller 38. Thus, it can be seen that the guide rollers 32, 38 and 41 cooperate to guide the belt 13 out of the main conveyor path indicated by the arrows 18, around a diverting region and the back into the main conveyor path. The guide rollers 32 and 38 cooperate to define therebetween a gap in the main conveyor path. Secured to each of the side plates 21 adjacent to the lower edge thereof are two longitudinally spaced-apart brackets 43, each rotatably carrying a return roller 44 for supporting the return flight 17 of the belt 13.

Respectively fixedly secured to the side plates 21 adjacent to the lowermost horizontal edge portions of the cutouts 23 are two angle mounting brackets 45, each having a rectangular mounting flange 46 disposed in back-to-back abutting engagement with the outer surface of the main wall 22 of the associated side plate 21, each mounting flange 46 being provided at the upper edge thereof with a laterally outwardly extending horizontal support flange 47. Each of the mounting brackets 45 is provided with a laterally outwardly extending square nut tab 49 with which is threadedly engaged a set screw 48, the lower end of which is engageable with the associated one of the angle shelves 27 for providing vertical adjustment of the mounting bracket 45, this adjustment being accommodated by elongated fastening slots (not shown) in the mounting flange 46. Similar nut tabs and set screws (not shown) may be provided on the side plates 21 for engagement with the bearing brackets 30 to adjust the level of the ends of the roller shafts 33 and 39.

The diverter assembly 20 includes a diverter mechanism, generally designated by the numeral 50, disposed at the diverting region in the gap between the guide rollers 32 and 38. The diverter mechanism 50 includes a pair of bearing brackets 51 respectively supported on the support flanges 47 of the mounting brackets 45, and each carrying a bearing 52, the bearings 52 cooperating for rotatably supporting an elongated drive shaft 53 extending transversely of the main conveyor 11 parallel to the guide rollers 32 and 38. Fixedly secured to the drive shaft 53 adjacent to one end thereof is a sprocket 54 disposed in meshing engagement with a drive chain 55 (see FIG. 3), which is in turn disposed in meshing engagement with a sprocket 56 carried by the shaft 33 of the input guide roller 32.

Thus, it will be appreciated that rotation of the input guide roller 32 by the belt 13 of the main conveyor 11 will effect a corresponding rotation of the drive shaft 53. In this regard, the friction sleeve 37 will serve to prevent slippage of the input guide roller 32 with respect to the belt 13. Also engaged with the drive chain 55 between the sprockets 54 and 56 is a tension pulley 57 adjustably carried on a mounting bracket 58 secured to the outer surface of the adjacent one of the side plates 21. Fixedly secured to the drive shaft 53 and spaced apart longitudinally thereof are a plurality of sheaves 59 for a purpose to be explained more fully below.

Carried by the mounting brackets 45 is a vane mounting assembly, generally designated by the numeral 60, which includes a pair of parallel box beams 61 extending horizontally substantially parallel to the drive shaft 53, and having the opposite ends thereof respectively fixedly secured to the mounting flanges 46 of the mounting brackets 45. The box beams 61 are horizontally spaced-apart in the conveying direction of the main conveyor 11 to define a space or gap 62 therebetween (see FIG. 6). Disposed in the gap 62 is a plurality of flange bearings 63, each having two pairs of flanges 64 respectively overlying and underlying the box beams 61 and receiving bolts 65 through complementary openings therein for threaded engagement with nuts 66, securely to fasten the flange bearings 63 in place on the box beams 61. Respectively rotatably supported in the flange bearings 63 are a plurality of vertically-disposed pivot shafts 68, the upper ends of which are respectively fixedly secured to the horizontal bottom flanges 69 of a like plurality of vertically-disposed support plates or vanes 70 adjacent to the trailing ends thereof.

Each of the vanes 70 is a flat, planar member having a rectangular cutout 71 at one lower corner thereof to accommodate the drive shaft 53 and the sheaves 59 thereon. Fixedly secured to each vane 70 along the vertically-extending edges thereof and extending laterally therefrom in the same direction as the bottom flange 69 are two side flanges 72. Each of the vanes 70 has one upper corner thereof truncated or mitered, as at 73, from the upper edge of the adjacent side flange 72 to the top edge of the vane 70 to accommodate the input guide roller 32.

Rotatably mounted on each vane 70 are three pulleys 74, 75 and 76, each having the shaft thereof disposed perpendicular to the vane 70 and projecting therefrom in the same direction as the flanges 69 and 72. The pulleys 74—76 are disposed in a substantially co-planar arrangement parallel to the plane of the vanes 70 and cooperate with an associated one of the sheaves on the drive shaft 53 for defining a continuous loop path for an endless conveying band 77. The pulleys 74 and 75 on each vane 70 have the axes thereof disposed in a common horizontal plane and are horizontally spaced-apart for cooperation with the endless band 77 to define a horizontal support reach 78 thereof, continuous and elongated in the conveying direction of the main conveyor 11. The support vanes 70 are arranged so that the support reaches 78 of the endless bands 77 thereof are substantially coplanar and parallel to the support flight 14 of the belt 13. Preferably, the support reaches 78 of the endless bands 77 are disposed a slight distance above the plane of the support flight 14 of the belt 13 so as to ensure positive engagement with conveyed articles.

The diverter mechanism 50 also includes a control assembly, generally designated by the numeral 80, which includes an elongated connecting rod 81, preferably formed of a solid plastic material and being substantially square in transverse cross section. The connecting rod 81 extends transversely of the main conveyor 11 beneath the bottom flanges 69 of the support vanes 70 adjacent to the leading ends thereof and is provided with a plurality of longitudinally spaced-apart bores 82 extending vertically therethrough (see FIG. 4) for respectively rotatably receiving therein shoulder bolts 83 which are respectively fixedly secured to the bottom flanges 69 of the vanes 70.

The vane 70 disposed closest to the side plate 21 carrying the mounting bracket 28 has a connecting tab 84 projecting laterally therefrom toward the mounting bracket 28 and disposed in use between the tongues of a clevis 85 and pivotally secured thereto by a pivot pin 86. The clevis 85 is in turn fixedly secured to drive means, such as the outer end of a piston rod 87 of an air cylinder 88, which is in turn secured to a mounting bracket 89. Carried by the mounting bracket 28 and respectively overlying and underlying the mounting bracket 89 and pivotally secured thereto by a pivot pin 90 are two pivot brackets 91 and 92. The air cylinder 88 is provided with fittings 93 and 94, respectively coupled to associated fluid inlet and outlet lines for powering the air cylinder 88.

In operation, the vanes 70 are substantially parallel to each other and are spaced apart longitudinally of the drive shaft 53 by predetermined distances which will be varied depending upon the size and shape of the articles to be conveyed. In the preferred embodiment the vanes 70 have been illustrated as arranged with the three vanes closest to one side of the main conveyor 11 being spaced apart a short distance for handling small articles, and the other vanes being spaced apart a larger distance for handling larger articles. Thus, it will be appreciated that with this single arrangement different sizes of articles can be accommodated. When small articles are to be conveyed, they would be conveyed along the one edge of the main conveyor 11 adjacent to the closely spaced vanes 70. However, it will be appreciated that any desired spacing could be used for the vanes 70.

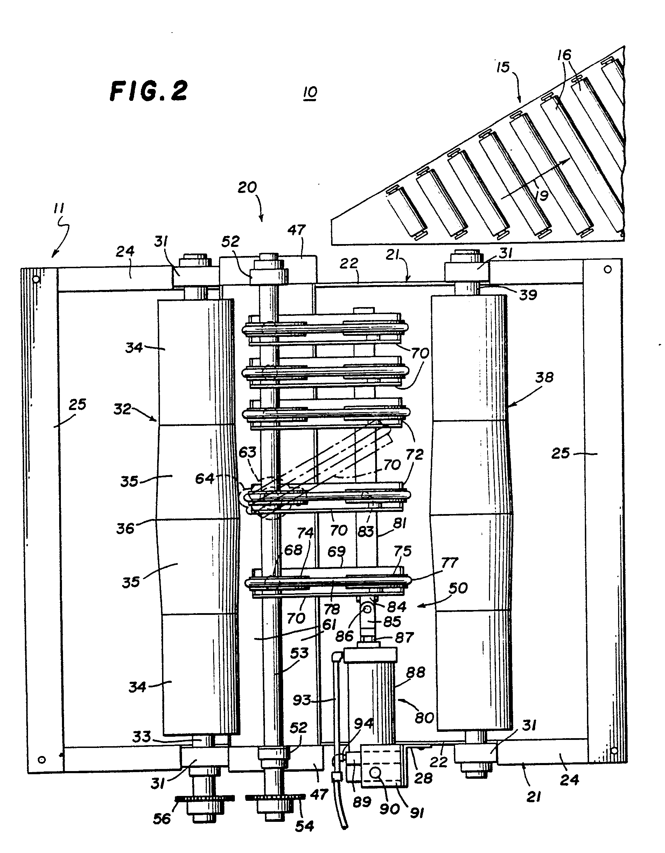

It will also be noted that when the air cylinder 88 is operated it acts, through the connecting rod 81, simultaneously to pivot the vanes 70 about the axes of the pivot shafts 68 thereof. In the preferred embodiment illustrated in the drawings, the vanes 70 are pivotally movable between a normal condition illustrated in solid line in the drawings, wherein the support reaches 78 of the endless bands 77 extend in the conveying direction of the main conveyor, and a full diverting position, illustrated in broken line in FIG. 2, wherein the support reaches 78 of the endless bands 77 extend in the conveying direction of the branch conveyor 15. However, it will be appreciated that by a different placement of the air cylinder 88, the diverter mechanism 50 could readily be modified to accommodate pivotal movement of the vanes 70 from their normal straight-ahead position in either direction. Preferably, when the vanes 70 are disposed in their normal straight-ahead position, each sheave 59 on the drive shaft 53 is substantially coplanar with the pulleys 74—76 on the associated vane 70. When the vanes 70 are pivoted to their diverting position, the endless bands 77 are twisted above the sheaves 59 in a well known manner, this twisting permitting the support reaches 78 of the endless belts 77 to always remain parallel to one another while still being driven from the fixed drive shaft 53.

It is a significant feature of the present invention that the elongated support reaches 78 of the endless belts 77 provide a continuous support for conveyed articles in the conveying direction. Thus, the diverter mechanism 50 can accommodate high speed handling of articles having very small dimensions in the conveying direction. These elongated continuous support reaches 78, and the high coefficient of friction of the material of the endless bands 77, provide good frictional support with the conveyed articles in all positions of the diverter mechanism 50 to ensure positive, accurate handling of conveyed articles even at high conveyor speeds. Thus, it has been found that by the use of the diverter assembly 20 of the present invention speeds up to 300 feet per minute (1,5 m/s) can be achieved on the main conveyor 11 and the diverter mechanism 50. The continuous positive support afforded by the elongated support reaches 78 of the endless belts 77 permits a wide variety of different types of articles to be supported and obviates the provision of firm bottoms on the supported articles.

While the drive for the diverter mechanism 50 has been disclosed as an air cylinder, it will be appreciated that other types of drives, such as pneumatic or electromechanical drives, could also be used.

## Claims

1. Diverter apparatus (20) for selectively diverting articles from one conveyor (11) to an intersecting conveyor (15), said diverter apparatus comprising article conveying means (70, 77) for conveying articles in a conveying direction, said article conveying means defining a plurality of parallel portions (78) spaced apart in a direction transverse to the conveying direction, control means (80, 81) coupled to said article conveying means (70, 77) for effecting simultaneous parallelogram-type movement of the portions (78) thereof in a support plane between a first position wherein the conveying direction thereof is substantially aligned with that of the one conveyor (11) and a second position wherein the conveying direction thereof is substantially aligned with that of the intersecting conveyor (15) characterized in that each of said portions comprises an article-support reach (78) of an endless band, said support reaches (78) cooperating to define said support plane.

2. The diverter apparatus of claim 1, characterized in that said article conveying means (70, 77) includes pairs of rotatable supports (74, 75) spaced-apart in the conveying direction for cooperation with respective said endless bands (77) for defining said article-support reach (78).

3. The diverter apparatus of either of claims 1 and 2, characterized in that the spacing between said portions (78) may be varied.

4. The diverter apparatus of any of the preceding claims, characterized by drive means (53—55) coupled to said article conveying means (70, 77) for effecting movement thereof in the conveying direction.

5. The diverter apparatus of claim 4, characterized in that said drive means includes means (55) coupling said article conveying means (70, 77) to the one conveyor (11) for driving said article conveying means (70, 77) from the one conveyor (11).

6. The diverter apparatus according to any of the preceding claims, characterized in that said control means (80, 81) includes fluid drive means (88) for effecting operation thereof.

7. The diverter apparatus according to claim 1, characterized in that said article conveying means comprises a plurality of support means (70) disposed adjacent to the one conveyor (11) and spaced apart transversely thereof, each of said support means (70) having a plurality of pulleys (74—76) rotatably mounted thereon, a flexible endless band (77) respectively associated with each said support means (70), each of said bands (77) being trained in a continuous loop around the pulleys (74, 75) on the associated support means (70), at least two of the pulleys (74, 75) on each support means (70) being spaced-apart in the conveying direction and cooperating with the associated band (77) for defining said article-support reach (78) thereof, and drive means (53, 59) coupled to each of said endless bands (77) for effecting movement thereof around the loop thereof, each of said support means (70) being mounted for pivotal movement about an axis perpendicular to the support plane of the reaches (78), said control means (80, 81) interconnecting said support means (70) and effecting simultaneous pivotal movement thereof between said first position and said second position.

8. The diverter apparatus of claim 7, characterized in that said pulleys (74—76) on each of said support means (70) are disposed in a substantially coplanar arrangement, the pulley planes of said several support means (70) being substantially parallel, each of said support means (70) including bearing means (63) for facilitating the pivotal movement thereof and wherein the pivot axis (68) of each of said support means (70) is disposed adjacent to one end of the associated article-support reach (78).

9. The diverter apparatus of claim 7 or 8, characterized in that each of said support means (70) has three pulleys (74—76) rotatably mounted thereon, said drive means including a rotatable drive shaft (53) extending transversely of the one conveyor and means (55) preferably coupling said drive shaft (53) to said one conveyor (11) for deriving driving power therefrom, said drive shaft (53) having a plurality of sheaves (59) fixedly secured thereto and respectively associated with said bands (77) in driving engagement therewith, each of said sheaves (59) cooperating with the three pulleys (74—76) on the associated one of the support means (70) for defining the associated one of said loops.

## Patentansprüche

1. Umlenkvorrichtung (20) zum wahlweisen Umlenken von Gegenständen von einem Förderer (11) zu einem im Winkel dazu angeordneten Förderer (15), mit zum Fördern von Gegenständen in einer Förderrichtung dienenden Gegenstandsfördermitteln (70, 77), die eine Mehrzahl von parallelen Strecken (78) bilden, die quer zur Förderrichtung im Abstand voneinander angeordnet sind, ferner mit den Gegenstandsfördermitteln (70, 77) gekuppelten Steuermitteln (80, 81) zum Herbeiführen von gleichzeitigen parallelogrammartigen Bewegungen der Strecken (78) der Fördermittel in einer Auflagerebene zwischen einer ersten Stellung, in der deren Förderrichtung im wesentlichen mit der des einen Förderers (11) fluchtet, und einer zweiten Stellung, in der ihre Förderrichtung im wesentlichen mit der des schneidenden Förderers (15) fluchtet, dadurch gekennzeichnet, daß jede der genannten Strecken einen Gegenstandsauflagerbereich (78) eines endlosen Bandes umfaßt und die genannten Auflagerbereiche (78) miteinander unter Bildung der Auflagerebene zusammenwirken.

2. Umlenkvorrichtung nach Anspruch 1, dadurch gekennzeichnet, daß die Gegenstandsfördermittel (70, 77) Paare von drehbaren Auflagern (74, 75) umfassen, die in der Förderrichtung im Abstand voneinander angeordnet sind und unter Bildung der Gegenstandsauflagerbereiches mit je einem der endlosen Bänder (77) zusammenwirken.

3. Umlenkvorrichtung nach Anspruch 1 oder 2, dadurch gekennzeichnet, daß der Abstand zwischen den genannten Strecken (78) veränderbar ist.

4. Umlenkvorrichtung nach einem der vorhergehenden Ansprüche, gekennzeichnet durch mit den Gegenstandsfördermitteln (70, 77) gekuppelte Antriebsmittel (53—55) zum Bewegen der Gegenstandsfördermittel in der Förderrichtung.

5. Umlenkvorrichtung nach Anspruch 4, dadurch gekennzeichnet, daß die Antriebsmittel Mittel (55) umfassen, die die Gegenstandsfördermittel (70, 77) mit dem einen Förderer (11) derart kuppeln, daß die Gegenstandsfördermittel (70, 77) von dem einen Förderer (11) angetrieben werden.

6. Umlenkvorrichtung nach einem der vorhergehenden Ansprüche, dadurch gekennzeichnet, daß die Fördermittel (80, 81) zu deren Betätigung dienende Fluidantriebe (88) umfassen.

7. Umlenkvorrichtung nach Anspruch 1, dadurch gekennzeichnet, daß die Gegenstandsfördermittel eine Mehrzahl von Trageinrichtungen (70) umfassen, die im Bereich des einen Förderers (11) im Querabstand von ihm angeordnet sind und auf denen jeweils eine Mehrzahl von Umlenkscheiben (74—76) drehbar gelagert und denen je ein flexibles endloses Band (77) zugeordnet ist, das in einer endlosen Schleife um die auf der zugeordneten Trageinrichtung (70) vorgesehenen Umlenkscheiben (74, 75) herumgeführt ist, wobei mindestens zwei der auf jeder Trageinrichtung (70) vorgesehenen Umlenkscheiben (74, 75) in der Förderrichtung im Abstand voneinander angeordnet sind und mit dem zugeordneten Band (77) unter Bildung des Gegenstandsauflagerbereiches (78) desselben zusammenwirken, mit jedem der endlosen Bänder (77) Antriebsmittel (53, 59) gekuppelt sind, die · dazu dienen, dieses endlose Band längs der von ihm gebildeten Schleife zu bewegen, jede der Trageinrichtungen (70) um eine zu der Auflagerebene der Bereiche (78) rechtwinklige Achse schwenkbar gelagert ist und die Steuermittel (80, 81) die Trageinrichtungen (70) miteinander verbinden und gleichzeitig zwischen der ersten und der zweiten Stellung verschwenken.

8. Umlenkvorrichtung nach Anspruch 7, dadurch gekennzeichnet, daß die auf jeder der Trageinrichtungen (70) vorgesehenen Umlenkscheiben (74—76) im wesentlichen in einer Ebene angeordnet sind, die Umlenkscheibenebenen der Trageinrichtungen (70) im wesentlichen parallel sind, jede Trageinrichtung (70) zum Erleichtern ihres Verschwenkens mit Lagerungen (63) versehen ist und die Schwenkachse (68) jeder der Trageinrichtungen (70) im Bereich des einen Endes des zugeordneten Gegenstandsauflagerbereiches (78) angeordnet ist.

9. Umlenkvorrichtung nach Anspruch 7 oder 8, dadurch gekennzeichnet, daß auf jeder der Trageinrichtungen (70) drei Umlenkscheiben (74—76) drehbar gelagert sind, daß die Antriebsmittel eine drehbare Antriebswelle (53) aufweisen, die sich quer zu dem einen Förderer erstreckt, und Mittel (55), die vorzugsweise die Antriebswelle (53) zur Abnahme von Antriebsleistung von dem einen Förderer (11) mit diesem kuppeln, wobei auf der Antriebswelle (53) eine Mehrzahl von Scheiben (59) befestigt ist, die je einem der Bänder (77) zugeordnet sind und mit ihm in Antriebsberührung stehen, und jede der Scheiben (59) mit den drei auf der zugeordneten Trageinrichtung (70) vorgesehenen Umlenkscheiben (74—76) unter Bildung der zugeordneten Schleife zusammenwirken.

**Revendications**

1. Appareil de détournement (20) pour détourner sélectivement des articles depuis un premier convoyeur (11) vers un convoyeur d'intersection (15), ledit appareil de détournement comportant des moyens de transport des articles (70, 77) pour transporter des articles dans une direction de transport, lesdits moyens de transport des articles définissant une pluralité de portions parallèles (78) espacées les unes des autres dans une direction transversale à la direction de transport, des moyens de commande (80, 81) couplés auxdits moyens de transport des articles (70, 77) pour effectuer un mouvement simultané du type parallélogramme de leurs portions (78) dans un plan de support, entre une première position dans laquelle leur direction de transport est substantiellement alignée avec celle du premier convoyeur (11) et une seconde position dans laquelle leur direction de transport est substantiellement alignée avec celle du convoyeur d'intersection (15), caractérisé en ce que chacune desdites portions comporte une portée (78) de support d'articles d'une bande sans fin, lesdites portées de support (78) coopérant pour définir ledit plan support.

2. Appareil de détournement selon la revendication 1, caractérisé en ce que lesdits moyens de transport des articles (70, 77) comprennent des paires de supports tournants (74, 75) espacés les uns des autres dans la direction du transport pour coopérer avec lesdites bandes sans fin (77) respectives pour définir ladite portée (78) de support des articles.

3. Appareil de détournement selon l'une ou l'autre des revendications 1 et 2, caractérisé en ce que l'on peut faire varier l'espacement entre lesdites portions (78).

4. Appareil de détournement selon l'une quelconque des revendications précédentes, caractérisé par des moyens d'entraînement (53—55) couplés auxdits moyens de transport des articles (70, 77) pour effectuer leur mouvement dans la direction du transport.

5. Appareil de détournement selon la revendication 4, caractérisé en ce que lesdits moyens d'entraînement incluent un moyen (55) pour coupler lesdits moyens de transport des articles (70, 77) au premier convoyeur (11) pour entraîner lesdits moyens de transport des articles (70, 77) à partir du premier convoyeur (11).

6. Appareil de détournement selon l'une quelconque des revendications précédentes, caractérisé en ce que lesdits moyens de commande (80, 81) comportent un moyen d'entraînement par fluide (88) pour les faire opérer.

7. Appareil de détournement selon la revendication 1, caractérisé en ce que lesdits moyens de transport des articles comportent une pluralité de moyens de support (70) disposés près du premier convoyeur (11) et espacés dans sa direction transversale, chacun desdits moyens de support (70) comportant une pluralité de poulies (74—76) qui y sont montées avec possibilité de rotation, une bande souple sans fin (77) respectivement associée à chacun desdits moyens de support (70), chacune desdites bandes (77) passant en boucle continue autour des poulies (74, 75) qui sont sur le moyen de support associé (70), au moins deux des poulies (74, 75) qui sont sur chaque moyen de support (70) étant espacées l'une de l'autre dans la direction du transport et coopérant avec la bande associée (77) pour définir sa portée de support d'articles (78), et des moyens d'entraînement (53, 59) couplés à chacune desdites bandes sans fin (77) pour effectuer leur mouvement autour de leur boucle, chacun desdits moyens de support (70) étant montés pour pouvoir pivoter autour d'un axe perpendiculaire au plan de support des portées (78), lesdits moyens de commande (80, 81) reliant entre eux lesdits moyens de support (70) et effectuant leur mouvement de pivotement simultané entre ladite première position et ladite seconde position.

8. Appareil de détournement selon la revendication 7, caractérisé en ce que lesdites poulies (74—76) qui sont sur chacun desdits moyens de support (70) sont disposées selon une disposition substantiellement coplanaire, les plans des poulies desdits plusieurs moyens de support (70) étant substantiellement parallèles, chacun desdits moyens de support (70) incluant des moyens formant palier (63) pour faciliter leur mouvement de pivotement; et l'axe de pivotement (68) de chacun desdits moyens de support (70) étant disposé près de l'une des extrémités de la portée associée (78) de support d'articles.

9. Appareil de détournement selon la revendication 7 ou 8, caractérisé en ce que chacun desdits moyens de support (70) comporte trois poulies (74—76) qui y sont montées avec possibilité de rotation, lesdits moyens d'entraînement incluant un arbre d'entraînement rotatif (53) qui s'étend transversalement au premier convoyeur et des moyens (55) qui couplent de préférence ledit arbre d'entraînement (53) audit premier convoyeur (11) pour en emprunter la puissance d'entraînement, ledit arbre d'entraînement (53) comportant une pluralité de réas (59) qui y sont fixés fermement et qui sont respectivement associées avec lesdites bandes (77), en contact d'entraînement avec elles, chacun desdits réas (59) coopérant avec les trois poulies (74—76) qui sont sur celui des moyens supports (70) qui lui est associé pour définir celle desdites boucles qui leur est associée.

**FIG.1**

**FIG.6**

**FIG.2**    10

FIG.3

## FIG.4

20

## FIG.5